# EUROPÄISCHE PATENTSCHRIFT

(11) **EP 3 277 551 B1**
(45) Veröffentlichungstag und Bekanntmachung des Hinweises auf die Patenterteilung: **27.02.2019**
(21) Anmeldenummer: 16711618.5
(22) Anmeldetag: 22.03.2016
(51) Int. Cl.: B60T 13/68, B60T 15/18, B60T 17/18

(54) **DRUCKLUFTEINRICHTUNG FÜR FAHRZEUGE MIT DOPPELRELAISVENTIL**
COMPRESSED-AIR DEVICE FOR VEHICLES, COMPRISING A DUAL RELAY VALVE
DISPOSITIF À AIR COMPRIMÉ POUR DES VÉHICULES ÉQUIPÉS D'UNE SOUPAPE À DOUBLE RELAIS

(30) Priorität: 30.03.2015 DE 102015104882
(43) Veröffentlichungstag der Anmeldung: 07.02.2018
(73) Patentinhaber: KNORR-BREMSE Systeme für Nutzfahrzeuge GmbH, 80809 München (DE)
(72) Erfinder: HECKER, Falk, 71706 Markgröningen (DE); ROETHER, Friedbert, 74389 Cleebronn (DE)
(86) Internationale Anmeldenummer: PCT/EP2016/056283
(87) Internationale Veröffentlichungsnummer: WO 2016/156114

(56) Entgegenhaltungen:
- EP-A2- 0 319 670
- EP-A2- 1 069 016
- DE-A1- 4 405 916
- DE-A1- 19 932 470

## Beschreibung

### Stand der Technik

Die Erfindung geht aus von einer Drucklufteinrichtung für Fahrzeuge, beinhaltend eine wenigstens zweikreisige pneumatische oder elektro-pneumatische Bremseinrichtung mit wenigstens einer Relaisventileinrichtung, von welcher ein Arbeitsanschluss direkt oder indirekt mit wenigstens einem pneumatischen Bremszylinder eines ersten Bremskreises und ein Vorratsanschluss mit wenigstens einem ersten, diesem ersten Bremskreis zugeordneten Druckluftvorrat verbunden ist, gemäß dem Oberbegriff von Anspruch 1.

Eine gattungsgemäße Drucklufteinrichtung ist beispielsweise aus DE 199 32 470 A1 bekannt und dort als druckluftbetätigte Fahrzeugbremsanlage eines Nutzfahrzeugs ausgeführt. Dabei dient ein erster elektro-pneumatischer Betriebsbremskreis als Hinterachs-Bremskreis für die beiden Räder der Hinterachse und ein zweiter elektro-pneumatischer Bremskreis als Vorderachs-Bremskreis für die der Vorderachse. Bei Ausfall des einen Bremskreises soll der andere Bremskreis des Nutzfahrzeugs noch ausreichend verzögern. Die Bremszylinder des Hinterachs-Bremskreises sind jeweils als Kombibremszylinder ausgebildet, die über ein 2-Kanal-Druckregelmdoul in Abhängigkeit von einem dem Hinterachs-Bremskreis zugeordneten Steuersignal eines Mehrkreis-Bremswertgebers mit einem Druckluftspeicher für den Hinterachs-Bremskreis verbindbar ist. Die Bremszylinder des Vorderachs-Bremskreises sind über zwei 1-Kanal-Druckregelmodule in Abhängigkeit von einem dem Vorderachs-Bremskreis zugeordneten Steuersignal des Mehrkreis-Bremswertgebers mit einem Druckluftspeicher für den Vorderachs-Bremskreis verbindbar. Die beiden 1-Kanal-Druckregelmodule weisen jeweils einen mit dem Druckluftspeicher für den Vorderachs-Bremskreis verbindbaren ersten Druckeingang und einen mit einem Steuerausgang des Mehrkreis-Bremswertgebers bzw. Betriebsbremsventils verbundenen zweiten Druckeingang auf, durch welchen ein vom Betriebsbremsventil abgeleiteter Vorderachs-Steuerdruck eingesteuert wird. Die beiden 1-Kanal-Druckregelmodule weisen ferner mit den Bremszylindern der Vorderachse verbundene Druckausgänge auf.

Die Druckregelmodule an der Vorderachse bzw. an der Hinterachse weisen in bekannter Weise jeweils eine Einlass-/Auslassmagnetventilkombination, ein Back-up-Magnetventil, ein von der Einlass-/Auslassmagnetventilkombination pneumatisch gesteuertes Relaisventil, einen mit dessen Arbeitsanschluss in Verbindung stehenden Drucksensor sowie ein elektronisches Steuergerät auf, welches die Einlass-/Auslassmagnetventilkombination und das Back-up-Magnetventil steuert und den Druck am Arbeitsanschluss repräsentierende Signale empfängt, um einen Ist-Bremsdruck am Arbeitsanschluss an einen von einem elektrischen Kanal eines Fußbremsmoduls vorgegebenen Soll-Bremsdruck anzupassen. Der Arbeitsanschluss des Relaisventils ist dann mit dem jeweils zugeordneten pneumatischen Bremszylinder verbunden. Bei Ausfall eines elektrischen Bremskreises schaltet das Back-up-Magnetventil unbestromt den im jeweiligen pneumatischen Kanal des Fußbremsmoduls herrschenden Steuerdruck auf den Steueranschluss des Relaisventils, um einen Bremsdruckaufbau am Arbeitsanschluss zu bewirken.

Bedingt durch die dynamische Achslastverlagerung bei einem Bremsvorgang muss der größte Teil der Bremskraft von den Vorderrädern aufgebracht werden. Bei Nutzfahrzeugen mit kurzem Radstand, hoher Vorderachslast und zumindest zeitweise niedriger Hinterachslast trifft dies in besonderem Maße zu, da wegen ihres kurzen Radstandes und ihrer großen Schwerpunkthöhe im Fall einer Bremsung eine hohe dynamische Achslastverlagerung auftritt. Bei Ausfall des Vorderachs-Bremskreises, beispielsweise durch eine Leckage im Vorderachs-Bremskreis, ist daher nicht mehr sichergestellt, dass die nun von den allein durch die Hinterräder gelieferte Bremskraft ausreicht, um die vom Gesetzgeber vorgeschriebene Verzögerung aufzubringen.

Aus diesem Grund ist bei der bekannten Fahrzeugbremsanlage eine zwischen der zweiten Steuerventileinrichtung und einem Bremszylinder des rechten Vorderrades angeordnete Umschaltventileinrichtung vorgesehen, die bei Ausfall des Vorderachs-Bremskreises Druckmittel aus dem vom Vorderachs-Bremskreis unabhängigen Druckluftspeicher zu diesem Bremszylinder schaltet, um dort als Ersatz für den ausgefallenen Vorderachs-Bremsdruck zu dienen. Die Umschaltventileinrichtung umfasst ein erstes Wechselventil, welches den größeren von Vorratsdrücken aus dem Druckluftspeicher für den Vorderachs-Bremskreis und einem Hilfs-Druckluftspeicher an einen Vorratsanschluss eines Relaisventils der Umschaltventileinrichtung steuert, welches steuerseitig vom Steuerdrucks des Hinterachs-Bremskreises gesteuert ist und dessen Arbeitsanschluss mit einem ersten Eingang eines zweiten Wechselventils verbunden ist, dessen zweiter Eingang vom Steuerdruck des Vorderachs-Bremskreises beaufschlagt ist und dessen Ausgang mit den Back-up-Magnetventilen der 1-Kanal-Druckregelmodule der Vorderachse verbunden ist. Folglich ist durch die beiden Wechselventile sichergestellt, dass Ersatz für einen z.B. aufgrund einer Leckage ausgefallenen Vorratsdruck und Steuerdruck für den als Sicherheitsebene unterlegten pneumatischen Vorderachs-Bremskreis vorhanden ist.

Unbefriedigend bei diesem Stand der Technik ist jedoch, dass solche Wechselventile verklemmen können und dann keine zuverlässige Zuschaltung des betreffenden Drucks mehr gewährleistet ist. Außerdem stellen sie zusätzlich zu verrohrende Ventile dar, was einen gewissen Aufwand erfordert.

Der vorliegenden Erfindung liegt deshalb die Aufgabe zugrunde, eine Drucklufteinrichtung der oben beschriebenen Art derart weiter zu entwickeln, dass sie zuverlässiger und kostengünstiger zu fertigen ist.

Diese Aufgabe wird erfindungsgemäß durch die Merkmale von Anspruch 1 gelöst.

### Offenbarung der Erfindung

Gemäß der Erfindung ist vorgesehen, dass die Relaisventileinrichtung wenigstens Folgendes umfasst:
a) Ein erstes Doppelsitzventil, über dessen Einlassventil eine erste mit dem Arbeitsanschluss in Verbindung stehende Arbeitskammer mit einer ersten Drucklufteingangskammer und über dessen Auslassventil die erste Arbeitskammer mit der Atmosphäre verbindbar ist;
b) ein zweites Doppelsitzventil, über dessen Einlassventil eine zweite mit dem Arbeitsanschluss in Verbindung stehende Arbeitskammer mit einer zweiten Drucklufteingangskammer und über dessen Auslassventil die zweite Arbeitskammer mit der Atmosphäre verbindbar ist,
c) wenigstens einen mit einem an einem Steueranschluss anstehenden Steuerdruck beaufschlagbaren Relaiskolben, welcher das erste Doppelsitzventil und das zweite Doppelsitzventil betätigt, wobei
d) die erste Drucklufteingangskammer an den ersten Druckluftvorrat und die zweite Drucklufteingangskammer an einen vom ersten Druckluftvorrat abweichenden zweiten Druckluftvorrat mittelbar oder unmittelbar angeschlossen ist, und wobei
e) die erste Drucklufteingangskammer und die zweite Drucklufteingangskammer wenigstens bei geschlossenen Einlassventilen der Doppelsitzventile voneinander getrennt sind.

Die Merkmalsgruppe e) bedeutet, dass wenigstens bei geschlossenen Einlassventilen der Doppelsitzventile keine Druckluft zwischen den Drucklufteingangskammern strömen kann. Dies sorgt dafür, dass druckluftversorgungsseitig bei der Relaisventileinrichtung wenigstens bei geschlossenen Einlassventilen der Doppelsitzventile Kreistrennung gewährleistet wird, so dass dann Leckagen in einem der Kreise bzw. Druckluftvorräte keinen Ausfall der Drucklufteinrichtung nach sich ziehen.

Die Relaisventileinrichtung bildet ein Doppelrelaisventil, wobei ein Relaisventil in der Regel ohnehin Bestandteil einer Drucklufteinrichtung ist, um durch relativ geringe Steuerluftströme einen demgegenüber größeren Arbeitsluftstrom wie z.B. einen Bremsdruck für pneumatische Bremszylinder zu steuern. Mit anderen Worten müsste dann lediglich ein solches ohnehin vorhandenes Relaisventil durch das Doppelrelaisventil gemäß der Erfindung ersetzt werden, was aber keinen zusätzlichen Verrohrungsaufwand erfordert.

Die Relaisventileinrichtung bildet dann ein "und/oder"-Glied, weil sie an ihrem Arbeitsanschluss oder Arbeitsausgang abhängig von dem am Steueranschluss anstehenden Steuerdruck entweder einen auf der Basis des ersten Druckluftvorrats und/oder auf der Basis des zweiten Druckluftvorrats gebildeten Druck an den Arbeitsanschluss aussteuert. Falls daher einer der Druckluftvorräte z.B. aufgrund einer Leckage ausfällt, so wird der Druck am Arbeitsanschluss der Relaisventileinrichtung abhängig von dem nicht von dem Leck betroffenen Druckluftvorrat gebildet. Somit ist Kreissicherheit gewährleistet.

Die Sicherheit wird weiterhin erhöht, als bei einem Relaisventil bzw. hier Doppelrelaisventil verglichen mit einem Wechselventil weniger Störungen z.B. im Hinblick auf ein Klemmen des Ventilkörpers zu erwarten sind.

Es versteht sich im Folgenden, dass die Betrachtung der Drucklufteinrichtung stets von den Druckluftvorräten bzw. Drucklufteingängen hin zum Arbeitsanschluss erfolgt. Ist die Rede von nachfolgenden Komponenten, so sind stets die in den Leitungen bzw. in der Drucklufteinrichtung schaltungstechnisch näher am Arbeitsanschluss bzw. Druckluftausgang angeordneten Komponenten gemeint. Ebenso verhält es sich mit Worten "eingangsseitig" und "ausgangsseitig", wobei mit "eingangsseitig" der Druckluftzufuhr zugewandte Anschluss und mit "ausgangsseitig" der dem Arbeitsanschluss bzw. Druckluftausgang zugewandte Anschluss einer Komponente gemeint ist. "Steuerseitig" beschreibt die Zugehörigkeit zu einem eventuell vorhandenen Steueranschluss einer Komponente. Ferner versteht sich, dass der Begriff "graduell" im Zusammenhang mit einem Druckniveau als zwischen einem maximalen Vorratsdruck und einem minimalen Umgebungsdruck liegend zu sehen ist. Als Ventilanordnung ist vorliegend eine sämtliche Ventile sowie sämtliche zwischen den Ventilen liegende Leitungselemente umfassende Anordnung zu verstehen.

Durch die in den Unteransprüchen aufgeführten Maßnahmen sind vorteilhafte Weiterbildungen und Verbesserungen der in dem unabhängigen Anspruch angegebenen Erfindung möglich.

Gemäß einer bevorzugten Ausführungsform ist der erste Bremskreis ein Vorderachs-Betriebsbremskreis, wobei der Arbeitsanschluss mit wenigstens einem pneumatischen Bremszylinder der Vorderachse mittelbar oder unmittelbar verbunden ist. Mittelbar bedeutet, dass beispielsweise zwischen den Arbeitsanschluss und dem wenigstens einen Bremszylinder wenigstens ein weiteres Ventil geschaltet ist, beispielsweise ein ABS-Drucksteuerventil.

Die bevorzugte Ausführungsform betrifft daher den eingangs beschriebenen Fall, dass bei einer druckversorgungsseitigen Leckage im oder nach dem ersten Druckluftvorrat des Vorderachs-Bremskreises dieser trotzdem noch funktionsfähig bleibt, als dann der Bremsdruck am Arbeitsanschluss abhängig von dem zweiten Druckluftvorrat gebildet wird. Folglich wird eine Bremsung an dem aufgrund der dynamischen Achslastverlagerung höher belasteten Vorderachs-Bremskreis sichergestellt.

Besonders bevorzugt ist der zweite Druckluftvorrat einem von einem Betriebsbremskreis abweichenden Druckluftverbraucherkreis zugeordnet, welcher beispielsweise ein Luftfederungskreis oder ein Nebenverbraucherkreis ist. Dadurch wird sichergestellt, dass ein zweiter Betriebsbremskreis z.B. ein Hinterachs-Betriebsbremskreis nicht von einer Leckage betreffend den ersten Druckluftvorrat oder den Vorderachs-Betriebsbremskreis beeinflusst wird.

Besonders bevorzugt ist die Relaisventileinrichtung Bestandteil eines elektro-pneumatischen Druckmodulators oder Druckregelmoduls, welcher oder welches außer der Relaisventileinrichtung wenigstens eine Einlass-/Auslassmagnetventilkombination, ein Back-up-Magnetventil, einen mit dem Arbeitsanschluss in Verbindung stehenden Drucksensor sowie ein elektronisches Steuergerät aufweist, welches die Einlass-/Auslassmagnetventilkombination und das Back-up-Magnetventil steuert und den Druck am Arbeitsanschluss repräsentierende Signale empfängt. Dann muss lediglich das normalerweise einfache Relaisventil eines solchen Druckregelmoduls durch die Relaisventileinrichtung bzw. das Doppelrelaisventil ersetzt werden.

Gemäß einer Weiterbildung wird dann der Steueranschluss der Relaisventileinrichtung sowohl von der einem von der Einlass-/Auslassventilkombination ausgesteuerten Steuerdruck als auch von einem vom Back-up-Ventil ausgesteuerten Steuerdruck beaufschlagt. Dadurch wird sichergestellt, dass bei einer Störung in der Elektrik des vorrangigen elektro-pneumatischen Vorderachs-Betriebsbremskreises wenn von der Einlass-/Auslassventilkombination kein Steuerdruck für die Relaisventileinrichtung mehr erzeugt werden kann, dieser Steuerdruck dann durch den pneumatischen Back-up-Steuerdruck dargestellt wird, den das Betriebsbremsventil bzw. das Fußbremsmodul dann parallel zum elektrischen Signal erzeugt. Dann wird der Bremsdruck am Arbeitsanschluss der Relaisventileinrichtung abhängig von diesem Steuerdruck erzeugt.

Besonders bevorzugt ist das Backup-Ventil des Druckregelmoduls ausgangsseitig mit dem Steueranschluss der Relaisventileinrichtung und eingangsseitig mit einem Ausgang eines Wechselventils verbunden, dessen erster Eingang mit einem dem ersten Bremskreis zugeordneten ersten Kanal eines Betriebsbremsventils und dessen zweiter Eingang einem einem zweiten Bremskreis zugeordneten zweiten Kanal eines Betriebsbremsventils verbunden ist. Durch das Wechselventil wird stets ein Back-up-Steuerdruck für die Relaisventileinrichtung sichergestellt, welcher dann entweder vom ersten Kanal des Betriebsbremsventils bzw. Fußbremsmoduls oder vom zweiten Kanal des Betriebsbremsventils bzw. Fußbremsmoduls verwertbar ist. Dann ist die Funktion des ersten Bremskreises bzw. Vorderachs-Betriebsbremskreises druckluftversorgungseitig durch das Doppelrelaisventil und steuerdruckseitig durch das Wechselventil sichergestellt, so dass weder druckluftversorgungseitige noch steuerdruckseitige Leckagen zu einem Ausfall des ersten Bremskreises bzw. Vorderachs-Betriebsbremskreises führen können.

Gemäß einer Weiterbildung ist der Strömungsquerschnitt zwischen dem zweiten Kanal des Betriebsbremsventils und dem zweiten Eingang des Wechselventils an wenigstens einer Stelle mittels eines Drosselelements gedrosselt. Mit anderen Worten ist in eine Druckluftverbindung zwischen einem Anschluss des zweiten Kanals des Betriebsbremsventil bzw. des Fußbremsmoduls, der beispielsweise dem Hinterachs-Betriebsbremskreis zugeordnet ist, und dem zweiten Eingang des Wechselventils ein Drosselelement geschaltet, welche den Strömungsquerschnitt der Druckluftverbindung lokal verkleinert. Dies bringt den Vorteil, dass im Falle einer Leckage in der Druckluftverbindung zwischen dem Ausgang des Wechselventils und dem Back-up-Magnetventil bzw. in der Druckluftverbindung zwischen dem Back-up-Magnetventil und dem Steueranschluss der Relaisventileinrichtung eine schnelle Entlüftung des Back-up-Steuerdrucks des Hinterachs-Betriebsbremskreises verhindert wird, indem eine Entlüftung dann nur über das Drosselelement von statten gehen kann. In diesem Fall wäre daher noch eine Bremsung des Fahrzeugs mit Hilfe des Back-up-Steuerdrucks des Hinterachs-Betriebsbremskreises möglich.

Infolgedessen ist der erste Bremskreis bevorzugt ein Vorderachs-Betriebsbremskreis und der zweite Bremskreis ein Hinterachs-Betriebsbremskreis der elektro-pneumatischen Betriebsbremseinrichtung wie beispielsweise eines elektronisch geregelten Bremssystems (EBS).

Besonders bevorzugt ist in Druckluftverbindungen zwischen den beiden Druckluftvorräten und dem Einlassventil der Einlass-/Auslassventilkombination wenigstens ein Rückschlagventil vorgesehen, welches eine Strömungsverbindung zwischen jedem einzelnen der beiden Druckluftvorräte und dem Einlassventils der Einlass-/Auslassventilkombination gestattet, aber eine Strömung in Richtung vom ersten Druckluftvorrat in den zweiten Druckluftvorrat und in Gegenrichtung hierzu verhindert. Dann kann auch bei geöffneten Einlassventilen der Doppelsitzventile der Relaisventileinrichtung keine Strömung zwischen den Druckluftvorräten zustande kommen, was sich positiv auf die Kreissicherheit auswirkt.

Insbesondere ist in den Druckluftverbindungen zwischen den beiden Druckluftvorräten und dem Einlassventil der Einlass-/Auslassventilkombination ein erstes Rückschlagventil vorgesehen, welches eine Strömung von dem ersten Druckluftvorrat zum Einlassventil gestattet, aber eine Strömung von dem zweiten Druckluftvorrat in den ersten Druckluftvorrat sperrt, sowie ein zweites Rückschlagventil, welches eine Strömung vom zweiten Druckvorrat zum Einlassventil gestattet, aber eine Strömung von dem ersten Druckluftvorrat in den zweiten Druckluftvorrat sperrt.

Vorteilhafterweise sind wenigstens das erste Doppelsitzventil, das zweite Doppelsitzventil, wenigstens ein Ventilglied und der wenigstens eine Relaiskolben der Relaisventileinrichtung koaxial angeordnet oder alternativ parallel versetzt zueinander. Dann können die Dimensionen der Relaisventileinrichtung in der Höhe und Breite je nach Anforderung bestimmt werden.

Weiterhin vorteilhaft betätigt der wenigstens eine Relaiskolben der Relaisventileinrichtung ein gemeinsames Ventilglied des ersten Doppelsitzventils und des zweiten Doppelsitzventils. Nicht zuletzt vorteilhaft weist das gemeinsame Ventilglied eine Druckluftdurchführung auf, mittels welcher die erste Arbeitskammer und die zweite Arbeitskammer mit der Atmosphäre verbindbar sind. Dadurch fällt die Zahl der Bauteile der Relaisventileinrichtung vorteilhaft gering aus.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: einen Auszug aus einem schematischen Schaltplan einer elektropneumatischen Betriebsbremseinrichtung als bevorzugte Ausführungsform einer Drucklufteinrichtung gemäß der Erfindung;
- Fig.2: einen Auszug aus einem schematischen Schaltplan einer elektropneumatischen Betriebsbremseinrichtung als weitere Ausführungsform einer Drucklufteinrichtung gemäß der Erfindung;
- Fig.3: einen Auszug aus einem schematischen Schaltplan einer elektropneumatischen Betriebsbremseinrichtung als weitere Ausführungsform einer Drucklufteinrichtung gemäß der Erfindung;
- Fig.4: einen Auszug aus einem schematischen Schaltplan einer elektropneumatischen Betriebsbremseinrichtung als weitere Ausführungsform einer Drucklufteinrichtung gemäß der Erfindung.

### Beschreibung der Ausführungsbeispiele

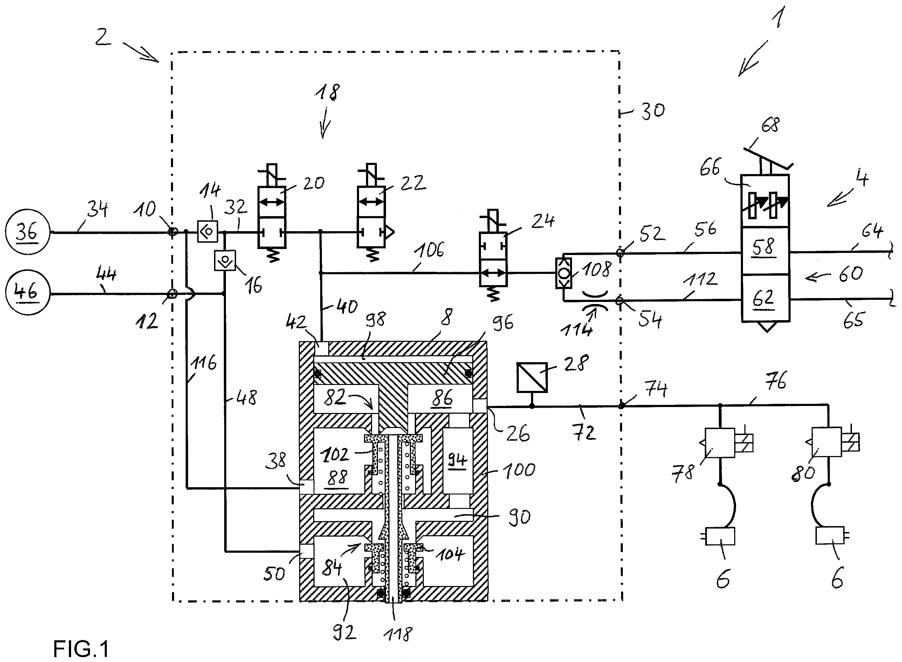

In Fig.1 ist ein Auszug aus einem schematischen Schaltplan einer elektro-pneumatischen Betriebsbremseinrichtung 1 als bevorzugte Ausführungsform einer Drucklufteinrichtung gemäß der Erfindung wiedergegeben. Von dieser elektro-pneumatischen Betriebsbremseinrichtung 1 beispielsweise in Form eines elektronisch geregelten Bremssystems mit Bremsdruckregelung (EBS) ist aus Maßstabsgründen ein hier z.B. einkanaliges Druckregelmodul 2 einer Vorderachse eines Nutzfahrzeugs sowie ein Fußbremsmodul 4 dargestellt. Das Druckregelmodul 2 ist den beiden Rädern der Vorderachse zugeordnet und regelt den pneumatischen Bremsdruck in den beiden pneumatischen Bremszylindern 6 der Vorderachse parallel.

Das Druckregelmodul beinhaltet eine Relaisventileinrichtung 8 beispielsweise in Form eines Doppelrelaisventils, zwei Vorratsanschlüsse 10, 12, zwei Rückschlagventile 14, 16, eine Einlass-/Auslass-Magnetventilkombination 18 mit einem Einlassventil 20 und einem Auslassventil 22 jeweils als 2/2-Wege-Magnetventile, ein Back-up-Magnetventil 24, einen mit einem Arbeitsanschluss 26 der Relaisventileinrichtung 8 in Verbindung stehenden Drucksensor 28 sowie ein hier nicht gezeigtes lokales elektronisches Steuergerät, welches die Einlass-/Auslass-Magnetventilkombination 18 und das Back-up-Magnetventil 24 steuert und den Druck am Arbeitsanschluss 26 repräsentierende Signale von dem Drucksensor 28 empfängt. Weiterhin sind auch noch interne Druckverbindungen zwischen den genannten Bauteilen und Baugruppen von dem Druckregelmodul 2 umfasst, auf welche weiter unten noch im Einzelnen eingegangen wird. Die genannten Bauteile und Baugruppen sind in einem Gehäuse 30 des Druckregelmoduls 2 untergebracht, welches in Fig.1 durch einen in strichpunktierter Linie umrahmten Kasten symbolisiert ist.

Genauer steht das Einlassventil 20 eingangsseitig über eine das erste Rückschlagventil 14 beinhaltende interne Druckverbindung 32 mit dem ersten Vorratsanschluss 10 des Gehäuses 30 in Verbindung, welcher über eine Druckleitung 34 mit einem ersten Druckluftvorrat 36 verbunden ist, welcher der Vorderachse zugeordnet ist. Andererseits führt auch eine interne Druckverbindung 116 von dem ersten Vorratsanschluss 10 des Gehäuses 30 zu einem ersten Vorratsanschluss 38 der Relaisventileinrichtung 8.

Das erste Rückschlagventil 14 öffnet in Strömungsrichtung vom ersten Vorratsanschluss 10 zum Einlassventil 20 und sperrt in Strömungsgegenrichtung. Das Einlassventil 20 ist wie das Auslassventil 22 als 2/2-Wege-Magnetventil ausgebildet und verbindet bestromt seinen Ausgang mit seinem Eingang und sperrt diese Verbindung unbestromt. Der Ausgang des Einlassventils 20 steht über eine Druckverbindung 40 mit einem Steueranschluss 42 der Relaisventileinrichtung 8 in Verbindung. Dieser Steueranschluss 42 ist außerdem über die interne Druckverbindung 40 mit dem Eingang des Auslassventils 22 verbunden, welches unbestromt eine Verbindung zu einer Entlüftung zur Atmosphäre hin sperrt und bestromt diese Verbindung herstellt.

Von einem zweiten Vorratsanschluss 12 des Gehäuses 30, welcher über eine Druckleitung 44 mit einem zweiten Druckluftvorrat 46 von Nebenverbraucherkreisen z.B. einem Luftfederungskreis verbunden ist, erstreckt sich eine interne Druckverbindung 48 zu einem zweiten Vorratsanschluss 50 der Relaisventileinrichtung 8 wie auch zum Eingang des Einlassventils 20. Weiterhin ist die interne Druckverbindung 48 auch an die interne Druckverbindung 32 hinter dem ersten Rückschlagventil 14 angeschlossen. In dieser Druckverbindung 48 ist das zweite Rückschlagventil 16 angeordnet, welches eine Strömung vom zweiten Vorratsanschluss 12 in den Eingang des Einlassventils 20 erlaubt, aber keine Strömung in Gegenrichtung. Mit anderen Worten ist mittels des zweiten Rückschlagventils 16 zwar eine Druckluftströmung von dem zweiten Druckluftvorrat 46 der Nebenverbraucherkreise zu dem Einlassventil 20 möglich. Das erste Rückschlagventil 14 verhindert aber eine Strömung von dem zweiten Vorratsanschluss 12 d.h. von dem zweiten Druckluftvorrat 46 der Nebenverbraucher zum ersten Vorratsanschluss 10 und damit zum ersten Druckluftvorrat 36. Mit anderen Worten ist in den internen Druckluftverbindungen 32, 48 zwischen den beiden Druckluftvorräten 36, 46 und dem Einlassventil 20 der Einlass-/Auslassventilkombination das erste Rückschlagventil 14 vorgesehen, welches eine Strömung von dem ersten Druckluftvorrat 36 zum Einlassventil 20 gestattet, aber eine Strömung von dem zweiten Druckluftvorrat 46 in den ersten Druckluftvorrat 46 sperrt, sowie das zweite Rückschlagventil 16, welches eine Strömung vom zweiten Druckluftvorrat 46 zum Einlassventil 20 gestattet, aber eine Strömung vom ersten Druckluftvorrat 36 in den zweiten Druckluftvorrat 46 sperrt. Die bisherige Beschreibung betrifft die Druckluftversorgungsseite des Druckregelmoduls 2.

Steuerdruckseitig sind hier beispielsweise zwei Steuerdruckanschlüsse 52, 54 an dem Gehäuse 30 des Druckregelmoduls 2 vorhanden. Der erste Steueranschluss 52 ist über eine Druckleitung 56 an einen Vorderachs-Kanal 58 eines hier zweikanaligen Betriebsbremsventils 60 des Fußbremsmoduls 4 angeschlossen, während der zweite Steueranschluss 54 über eine Druckleitung 112 an einen Hinterachs-Kanal 62 des Betriebsbremsventils 60 angeschlossen ist. Der Vorderachs-Kanal 58 ist über eine Vorratsleitung 64 an den ersten Druckluftvorrat 36 und der Hinterachs-Kanal 62 über eine Vorratsleitung 65 an einen hier nicht gezeigten Hinterachs-Druckluftvorrat angeschlossen, der getrennt vom ersten Druckluftvorrat 36 und vom zweiten Druckluftvorrat 46 ist.

Weiterhin beinhaltet das Fußbremsmodul 4 auch einen elektrischen Kanal 66. Wenn daher ein Fußbetätigungsorgan in Form einer Fußbremsplatte 68 betätigt wird, so steuert das Fußbremsmodul 4 einerseits den Fahrerbetriebsbremswunsch repräsentierende pneumatische Back-up--Steuerdrücke in den Vorderachs-Kanal 58 und in den Hinterachs-Kanal 62 und gleichzeitig über den elektrischen Kanal 66 ein elektrisches Betriebsbremsanforderungssignal über eine elektrische Signalleitung in ein hier nicht gezeigtes zentrales elektronisches Bremssteuergerät ein. Abhängig von dem elektrischen Betriebsbremsanforderungssignal und von weiteren Parametern wie beispielsweise der Achslastverteilung steuert dann das zentrale Bremssteuergerät das hier ebenfalls nicht gezeigte Steuergerät des Druckregelmoduls 2 an, um einen der Betriebsbremsanforderung und weiteren Parametern entsprechenden Soll-Bremsdruck an einem Ausgangsanschluss 74 zu erzeugen, welcher mit dem Arbeitsanschluss 26 der Relaisventilanordnung 8 in Verbindung steht.

Hierzu steuert das Steuergerät des Druckregelmoduls die Einlass-/Auslassventilkombination 18 an, um einen dem Soll-Bremsdruck entsprechenden Steuerdruck am Steueranschluss 42 der Relaisventilanordnung 8 zu erzeugen. Die Relaisventilanordnung 8 moduliert dann abhängig von den an seinen Vorratsanschlüssen 38, 50 anstehenden Vorratsdrücken einen Bremsdruck an ihrem Arbeitsanschluss 26, welcher über eine einen Drucksensor 28 beinhaltende interne Druckverbindung 72 mit dem Ausgangsanschluss 74 verbunden ist. Dieser Ausgangsanschluss 74 ist wiederum über eine Druckleitung 76 mit vom zentralen Bremssteuergerät elektrisch gesteuerten ABS-Drucksteuerventilen 78, 80 verbunden, welche den von der Relaisventileinrichtung 8 ausgesteuerten Bremsdruck halten, senken oder unbeeinflusst zu den Bremszylindern 6 durchsteuern können, je nachdem ob ein unzulässiger Bremsschlupf vorliegt oder nicht.

Der Drucksensor 28 misst den Ist-Bremsdruck und meldet ihn an das hier nicht gezeigte elektronische Steuergerät des Druckregelmoduls 2, welches daraufhin die Einlass-/Auslassventilkombination 18 steuert, um den Ist-Bremsdruck an den Soll-Bremsdruck anzugleichen.

Die Relaisventileinrichtung 8 bildet ein Doppelrelaisventil aus und beinhaltet ein erstes Doppelsitzventil 82 und ein zweites Doppelsitzventil 84. Beide Doppelsitzventile 82 und 84 beinhalten je ein Einlassventil und ein Auslassventil, wobei das Einlassventil bei von einem Einlassventilsitz abgehobenem Ventilglied öffnet und bei gegen den Einlassventilsitz gedrängten Ventilglied schließt und das Auslassventil bei von einem Auslassventilsitz abgehobenem Ventilglied öffnet und bei gegen den Auslassventilsitz gedrängten Ventilglied schließt.

Über das Einlassventil des ersten Doppelsitzventils 82 ist dann eine erste mit dem Arbeitsanschluss 26 in Verbindung stehende Arbeitskammer 86 mit einer ersten Drucklufteingangskammer 88 und über das Auslassventil des ersten Doppelsitzventils 82 die erste Arbeitskammer 86 mit der Atmosphäre verbindbar.

In analoger Weise ist über das Einlassventil des zweiten Doppelsitzventils 84 eine zweite mit dem Arbeitsanschluss 26 in Verbindung stehende Arbeitskammer 90 mit einer zweiten Drucklufteingangskammer 92 und über das Auslassventil des Doppelsitzventils die zweite Arbeitskammer 90 mit der Atmosphäre verbindbar.

Die erste Drucklufteingangskammer 88 ist mit dem ersten Vorratsanschluss 38 und die zweite Druckeingangskammer 92 mit dem zweiten Vorratsanschluss 50 verbunden. Die beiden Arbeitskammern 86, 90 sind über einen Verbindungskanal 94 miteinander verbunden, während zwischen den Drucklufteingangskammern 88, 92 zumindest bei geschlossenen Einlassventilen der Doppelsitzventile 82, 84 keine Strömungsverbindung besteht.

Außerdem weist die Relaisventileinrichtung 8 einen mit einem an dem Steueranschluss 42 anstehenden Steuerdruck beaufschlagbaren Relaiskolben 96 auf. Hierzu ist der Steueranschluss 42 mit einer Steuerkammer 98 verbunden, die der Relaiskolben 96 und ein Gehäuse 100 der Relaisventileinrichtung 8 begrenzen. Der Relaiskolben 96 ist in dem Gehäuse 100 axial beweglich geführt.

Der Relaiskolben 96 betätigt über ein in dem Gehäuse 100 der Relaisventileinrichtung 8 axial beweglich geführtes erstes Ventilglied 102 das erste Doppelsitzventil 82 und das zweite Doppelsitzventil 84. Das erste Ventilglied 102 ist über eine Druckfeder am Gehäuse 100 der Relaisventileinrichtung 8 gegen die Betätigungsrichtung abgestützt. Weiterhin verfügt die Relaisventileinrichtung 8 über ein zweites, dem zweiten Doppelsitzventil 84 zugeordnetes und im Gehäuse 100 der Relaisventileinrichtung 8 axial beweglich geführtes Ventilglied 104, welches ebenfalls durch eine Druckfeder am Gehäuse 100 gegen die Betätigungsrichtung abgestützt ist. Die Funktionsweise solcher Doppelsitzventile 82, 84 ist hinreichend bekannt und soll deshalb hier nicht weiter erörtert werden.

Beispielsweise sind wenigstens das erste Doppelsitzventil 82, das zweite Doppelsitzventil 84, die beiden Ventilglieder 102, 104 und der Relaiskolben 96 der Relaisventileinrichtung 8 koaxial angeordnet oder alternativ parallel versetzt zueinander.

Insbesondere betätigt der hier einzige Relaiskolben 96 der Relaisventileinrichtung 8 das erste Ventilglied 102 als gemeinsames Ventilglied des ersten Doppelsitzventils 82 und des zweiten Doppelsitzventils 84. Bevorzugt weist das gemeinsame Ventilglied 102 eine Druckluftdurchführung 118 auf, mittels welcher die erste Arbeitskammer 86 und die zweite Arbeitskammer 90 mit der Atmosphäre verbindbar sind.

Steuerdruckseitig ist eine interne Druckverbindung 106 zwischen dem Steueranschluss 42 der Relaisventileinrichtung 8 und einem Ausgang eines internen Wechselventils 108 gezogen, in welcher das interne Back-up-Magnetventil 24 in Form eines 2/2-Wege-Magnetventils angeordnet ist, welches unbestromt seinen Eingang an seinen Ausgang durchschaltet und bestromt sperrt.

Ein erster Eingang des Wechselventils ist mit dem ersten Steueranschluss 52 und dessen zweiter Eingang mit dem zweiten Steueranschluss 54 des Druckregelmoduls 2 verbunden. Der erste Steueranschluss 52 ist über die Druckleitung 56 an den Vorderachs-Kanal 58 des Betriebsbremsventils 60 angeschlossen und der zweite Steueranschluss über die Druckleitung 112 an den Hinterachs-Kanal 62 des Betriebsbremsventils 60. In dieser Druckleitung 112 ist in Bezug zu dem Druckregelmodul 2 beispielsweise interne Drossel 114 als lokale Strömungsquerschnittsverengung angeordnet.

Der Vorderachs-Betriebsbremskreis beinhaltet daher den elektrischen Kanal 66 für den vorrangigen elektro-pneumatischen Vorderachs-Betriebsbremskreis, den Vorderachs-Kanal 58 des Betriebsbremsventils 60 für den demgegenüber nachrangigen pneumatischen Vorderachs-Betriebsbremskreis, das Druckregelmodul 2 insbesondere mit der Relaisventileinrichtung 8, der Einlass-/Auslassventilkombination 18, dem Back-up-Magnetventil 24, dem Drucksensor 28, der Drossel 114 und dem Wechselventil 108, den ersten Druckluftvorrat 36 sowie die Bremszylinder 6 der Vorderachse sowie die dazugehörigen Druckverbindungen. Die ABS-Drucksteuerventile 78, 80 an der Vorderachse sind optional. Anstatt eines 1-Kanal-Druckregelmoduls können auch zwei 1-Kanal-Druckregelmodule an der Vorderachse für je ein Vorderrad vorhanden sein. Der Hinterachs-Betriebsbremskreis beinhaltet den elektrischen Kanal 66 für den vorrangigen elektro-pneumatischen Hinterachs-Betriebsbremskreis, den Hinterachs-Kanal 62 des Betriebsbremsventils 60 für den demgegenüber nachrangigen pneumatischen Hinterachs-Betriebsbremskreis, vorzugsweise ein 2-Kanal-Druckregelmodul sowie einen eigenen, hier nicht gezeigten Druckluftvorrat sowie kombinierte Federspeicher-Betriebsbremszylinder der Hinterachse. Optional können auch ABS-Drucksteuerventile an der Hinterachse vorhanden sein.

Vor diesem Hintergrund ist die Funktionsweise der elektro-pneumatischen Betriebsbremseinrichtung 1 wie folgt:
Bei intakter Druckluftversorgung und Elektrik bzw. Elektronik wird bei einer Betätigung der Fußbremsplatte 68 zum einen ein elektrisches Betriebsbremsanforderungssignal in dem elektrischen Kanal 66 des Fußbremsmoduls 4 erzeugt und an das zentrale Bremssteuergerät geleitet, welches abhängig davon und unter Umständen weiterer Parameter wie beispielsweise einer Achslastverteilung ein einen Soll-Bremsdruck repräsentierendes Signal in das lokale Steuergerät des Druckregelmoduls 2 einsteuert.

Parallel hierzu werden in den beiden Kanälen 58, 62 des Betriebsbremsventils 60 des Fußbremsmoduls 4 Steuerdrücke (Vorderachs-Steuerdruck, Hinterachs-Steuerdruck) erzeugt und in die beiden Eingänge des Wechselventils 108 eingesteuert, wobei der größere der beiden Steuerdrücke an den Eingang des Back-up-Magnetventils 24 geschleift wird, welches diesen Steuerdruck wegen seiner bestromten Sperrstellung vom Steueranschluss 42 der Relaisventileinrichtung 8 zurückhält.

Das lokale Steuergerät steuert dann die Einlass-/Auslassventilkombination 18 des Druckregelmoduls 2 an der Vorderachse an, um am Steueranschluss 42 der Relaisventileinrichtung 8 einen dem Soll-Bremsdruck entsprechenden Steuerdruck zu erzeugen. Dieser Steuerdruck steht in der Steuerkammer 98 der Relaisventileinrichtung 8 an und schiebt den Relaiskolben 96 in Fig.1 nach unten, wodurch das erste Ventilglied 102 nach unten verschoben und jeweils die Auslassventile der beiden Doppelsitzventile 82, 84 geschlossen und deren Einlassventile geöffnet werden. Dadurch gelangt zum einen abhängig vom jeweils gesteuerten Öffnungsquerschnitt der Einlassventile die in der ersten Drucklufteingangskammer 88 anstehende, vom ersten Druckluftvorrat 36 herangeführte Druckluft unter Vorratsdruck zum gemeinsamen Arbeitsanschluss 26 der Relaisventileinrichtung 8 und zum andern die in der zweiten Drucklufteingangskammer 92 vom zweiten Druckluftvorrat 46 herangeführte Druckluft unter Vorratsdruck zum gemeinsamen Arbeitsanschluss 26 der Relaisventileinrichtung 8 und bildet dort einen Ist-Bremsdruck, welcher vom Drucksensor 28 gemessen und an das lokale Steuergerät des Druckregelmoduls 2 rückgemeldet wird. Bei einer Abweichung des Ist-Bremsdrucks vom Soll-Bremsdruck wird die Einlass-/Auslassventilkombination 18 im Abgleichssinne angesteuert. Über die beiden dem Ausgangsanschluss 74 nachgeordneten ABS-Drucksteuerventile 78, 80 gelangt dann der Soll-Bremsdruck in die pneumatischen Bremszylinder 6 der Vorderachse. Falls während der Betriebsbremsung ein unzulässiger Bremsschlupf detektiert werden sollte, so werden die ABS-Drucksteuerventile 78, 80 zum Drucksenken, Druckhalten oder Druckdurchlass angesteuert, bis sich ein zulässiger Bremsschlupf einstellt.

Falls die Stromversorgung bzw. die elektronische Steuerung der elektro-pneumatischen Betriebsbremseinrichtung 1 ausfällt, so kann die Einlass-/Auslassventilkombination 18 keinen Steuerdruck mehr an den Steueranschluss 42 der Relaisventileinrichtung 8 liefern. Dafür schaltet das Back-up-Magnetventil 24 unbestromt in seine Durchlassstellung und lässt den durch das Wechselventil 108 selektierten größeren der beiden Steuerdrücke (Hinterachs-Steuerdruck oder Vorderachs-Steuerdruck) am Steueranschluss 42 der Relaisventileinrichtung 8 anstehen. Dann sorgt dieser größere Steuerdruck dafür, dass in den Bremszylindern 6 der Vorderachse ein Bremsdruck einstellt, dann jedoch ohne Bremsdruckregelung. Parallel hierzu sorgt der Hinterachs-Steuerdruck im Hinterachs-Kanal 62 für eine Ausbildung eines Bremsdrucks im pneumatischen Hinterachs-Betriebsbremskreis.

Falls dabei, d.h. bei ausgefallener Elektrik oder Elektronik oder auch unabhängig davon in der Druckleitung 56 zwischen dem Vorderachs-Kanal 58 des Betriebsbremsventils 60 des Fußbremsmoduls 4 und dem ersten Steuereingang 52 eine Leckage auftritt, so fällt der Vorderachs-Steuerdruck stark ab und mittels des Wechselventils 108 wird der dann größere Hinterachs-Steuerdruck an den Eingang des Back-up-Magnetventils 24 geführt, welches diesen an den Steueranschluss 42 der Relaisventileinrichtung weiterschaltet. Dadurch wird eine Ausbildung von Bremsdruck an der Vorderachse gesichert, auch wenn die Elektrik/Elektronik bzw. der elektrische Kanal 66 ausgefallen ist und in der Druckleitung 56 zwischen dem Vorderachs-Kanal 58 des Betriebsbremsventils 60 des Fußbremsmoduls 4 und dem ersten Steuereingang 52 des Druckregelmoduls 2 eine Leckage aufgetreten ist.

Falls zwischen dem Ausgang des Wechselventils 108 und dem Steueranschluss 42 der Relaisventileinrichtung eine Leckage auftritt, so würde der größere der beiden an den Eingängen des Wechselventils 108 anstehende Steuerdruck schnell sinken. Jedoch verhindert die Drossel 114 in der Druckleitung 112 zwischen dem Hinterachs-Kanal 62 des Betriebsbremsventils 60 und dem zweiten Eingang des Wechselventils 108, dass der Hinterachs-Steuerdruck über die Leckage schnell abgebaut wird, so dass der Hinterachs-Steuerdruck das Fahrzeug über den Hinterachs-Betriebsbremskreis noch zum Stehen bringen kann.

Falls in dem Vorderachs-Betriebsbremskreis druckluftversorgungsseitig beispielsweise eine Leckage in der Druckleitung 34 bzw. in der Druckverbindung 116 zwischen dem ersten Druckluftvorrat 36 und dem ersten Vorratsanschluss 38 der Relaisventileinrichtung 8 auftritt, so vermag die Druckluft aus dem zweiten Druckluftvorrat 46, die am zweiten Vorratsanschluss 50 der Relaisventileinrichtung 8 ansteht, noch für eine Ausbildung eines Bremsdrucks im Vorderachs-Betriebsbremskreis zu sorgen, weil dieser Druck bei einer Betätigung des Relaiskolbens 96 sei es aufgrund der Einlass-Auslassventilkombination 18 oder aufgrund eines Back-up-Steuerdrucks dann moduliert an den Arbeitsanschluss 26 weitergesteuert wird. Das erste Rückschlagventil 14 verhindert dann, dass Druckluft aus dem zweiten Druckluftvorrat 46 über die Leckage nach Draußen strömen kann, wie anhand von Fig.1 leicht vorstellbar ist. Weiterhin kann auch die Druckluft aus dem zweiten Druckluftvorrat 46 das Einlassventil 20 versorgen, weil das zweite Rückschlagventil 16 in dieser Strömungsrichtung öffnet. Dann ist eine Funktion sowohl des elektro-pneumatischen als auch des pneumatischen Vorderachs-Betriebsbremskreises auch bei einer druckluftversorgungsseitigen Leckage den ersten Druckluftvorrat 36 betreffend gewährleistet.

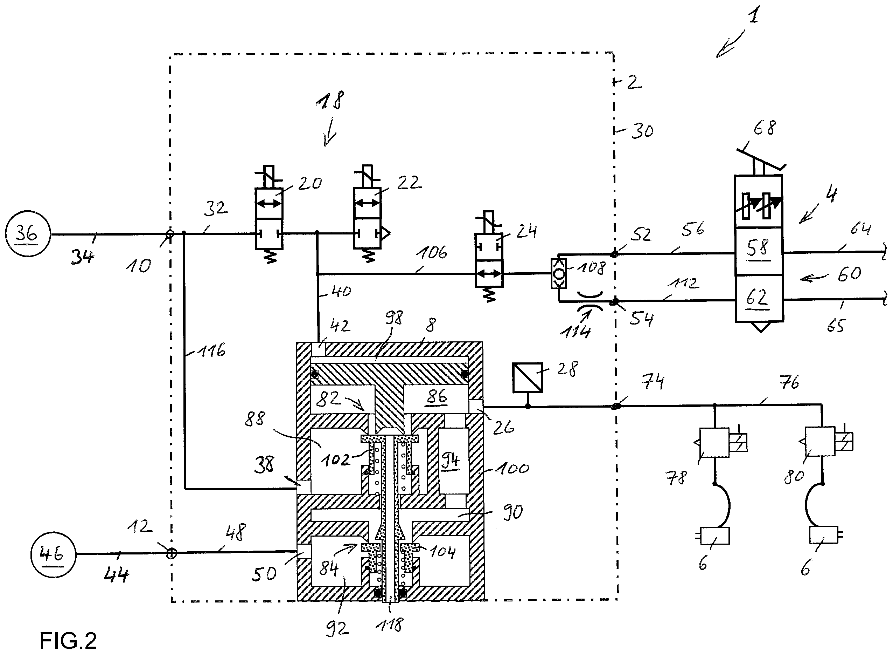

In Fig.2 ist eine weitere Ausführungsform einer elektro-pneumatischen Betriebsbremseinrichtung 1 gezeigt, wobei gleiche und gleich wirkende Bauteile und Baugruppen mit in Bezug auf Fig.1 identischen Bezugszahlen bezeichnet sind. Im Unterschied zur Ausführungsform von Fig.1 sind keine Rückschlagventile 14, 16 vorhanden, so dass bei geöffneten Einlassventilen der Doppelsitzventile 82, 84 z.B. eine Strömung von dem zweiten Druckluftvorrat 46 in die zweite Drucklufteingangskammer 92 und von dort über das geöffnete Einlassventil des zweiten Doppelsitzventils 84, die zweite Arbeitskammer 90, den Verbindungskanal 94, die erste Arbeitskammer 86 und die erste Drucklufteingangskammer 88 in die Druckverbindung 116 zwischen dem ersten Vorratsanschluss 38 und den ersten Druckluftvorrat 36 gelangen kann. Falls dort eine Leckage vorläge, so könnte in diesem Fall der zweite Druckluftvorrat 46 nur noch begrenzt zur Ausbildung eines Bremsdrucks an der Vorderachse beitragen. Die druckluftversorgungsseitige Kreistrennung ist hier daher nur bei geschlossenen Einlassventilen der Doppelsitzventile 82, 84 gewährleistet.

Weiterhin versorgt ausschließlich der erste Druckluftvorrat 36, der dem Vorderachs-Betriebsbremskreis zugeordnet ist, das Einlassventil 20 der Einlass-/Auslassventilkombination 18 mit Druckluft. Hingegen ist die Versorgung mit Back-up-Steuerdrücken über zwei parallele Kanäle 58, 62 wie in Fig.1 vorgesehen. Insgesamt liegt daher eine im Vergleich zu Fig.1 etwas geringe Ausfallsicherheit in Bezug auf die Versorgung des Vorderachs-Betriebsbremskreises mit Vorratsdruckluft vor.

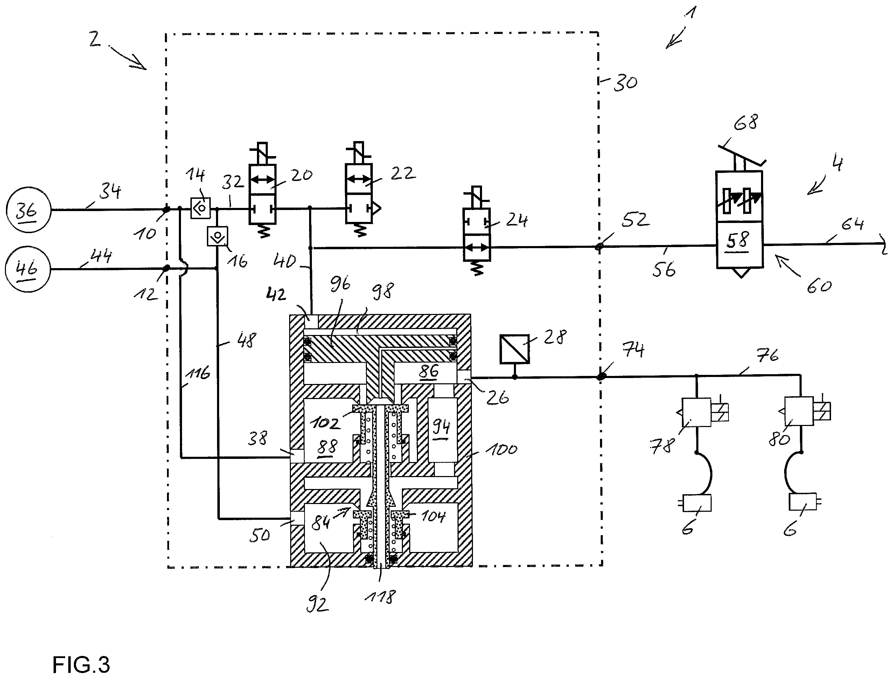

Die Ausführungsform von Fig.3 unterscheidet sich von der Ausführungsform von Fig.1 dadurch, dass der Vorderachs-Betriebsbremskreis lediglich von dem Vorderachs-Kanal 58 des Betriebsbremsventils mit Steuerdruck versorgt wird. Insgesamt liegt daher eine im Vergleich zu Fig.1 etwas geringe Ausfallsicherheit in Bezug auf die Versorgung des Vorderachs-Betriebsbremskreises mit Steuerdruckluft vor.

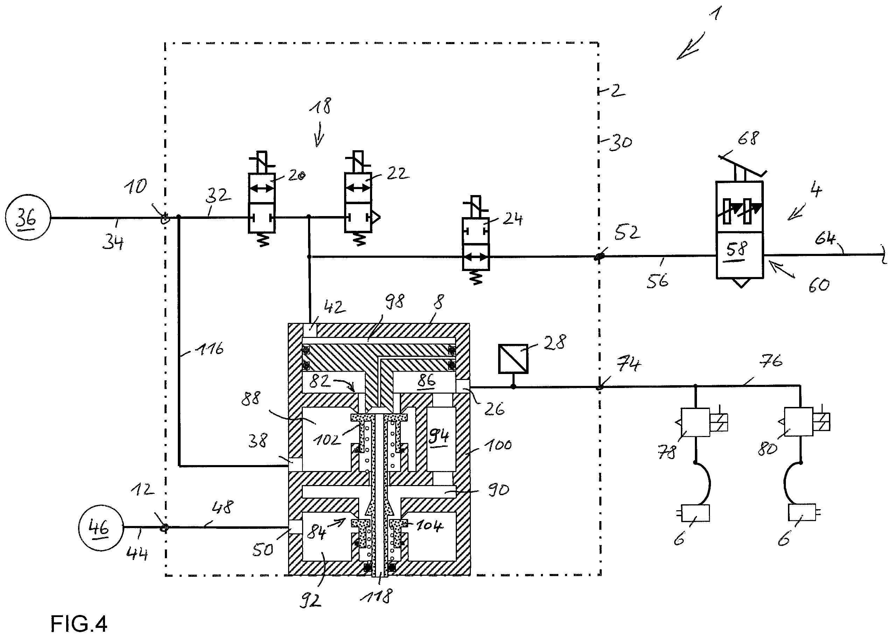

Die Ausführungsform von Fig.4 kombiniert die einfachere Versorgung des Vorderachs-Betriebsbremskreises mit Vorratsdruckluft gemäß Fig.2 mit der einfacheren Versorgung des Vorderachs-Betriebsbremskreis mit Steuerdruckluft gemäß Fig.3.

### Bezugszeichenliste

- 1: Betriebsbremseinrichtung
- 2: DRM
- 4: Fußbremsmodul
- 6: Bremszylinder
- 8: Relaisventileinrichtung
- 10: erster Vorratsanschluss
- 12: zweiter Vorratsanschluss
- 14: erstes Rückschlagventil
- 16: zweites Rückschlagventil
- 18: Einlass-/Auslassventilkombination
- 20: Einlassventil
- 22: Auslassventil
- 24: Back-up-Magnetventil
- 26: Arbeitsanschluss
- 28: Drucksensor
- 30: Gehäuse
- 32: Druckverbindung
- 34: Druckleitung
- 36: erster Druckluftvorrat
- 38: erster Vorratsanschluss
- 40: Druckverbindung
- 42: Steueranschluss
- 44: Druckleitung
- 46: zweiter Druckluftvorrat
- 48: Druckverbindung
- 50: zweiter Vorratsanschluss
- 52: erster Steuerdruckanschluss
- 54: zweiter Steuerdruckanschluss
- 56: Druckleitung
- 58: Vorderachs-Kanal
- 60: Betriebsremsventil
- 62: Hinterachs-Kanal
- 64: Vorratsleitung
- 65: Vorratsleitung
- 66: elektrischer Kanal
- 68: Fußbremsplatte
- 72: Druckverbindung
- 74: Ausgangsanschluss
- 76: Druckleitung
- 78: ABS-Drucksteuerventil
- 80: ABS-Drucksteuerventil
- 82: erstes Doppelsitzventil
- 84: zweites Doppelsitzventil
- 86: erste Arbeitskammer
- 88: erste Drucklufteingangskammer
- 90: zweite Arbeitskammer
- 92: zweite Drucklufteingangskammer
- 94: Verbindungskanal
- 96: Relaiskolben
- 98: Steuerkammer
- 100: Gehäuse von 8
- 102: erstes Ventilglied
- 104: zweites Ventilglied
- 106: Druckverbindung
- 108: Wechselventil
- 112: Druckleitung
- 114: Drossel
- 116: Druckverbindung
- 118: Druckluftdurchführung

## Patentansprüche

1. Drucklufteinrichtung für Fahrzeuge, beinhaltend eine wenigstens zweikreisige pneumatische oder elektro-pneumatische Bremseinrichtung (1) mit wenigstens einer Relaisventileinrichtung (8), von welcher ein Arbeitsanschluss (26) direkt oder indirekt mit wenigstens einem pneumatischen Bremszylinder (6) eines ersten Bremskreises und ein Vorratsanschluss (38) mit wenigstens einem ersten, diesem ersten Bremskreis zugeordneten Druckluftvorrat (36) verbunden ist, wobei die Relaisventileinrichtung (8) wenigstens Folgendes umfasst:
a) ein erstes Doppelsitzventil (82), über dessen Einlassventil eine erste mit dem Arbeitsanschluss (26) in Verbindung stehende Arbeitskammer (86) mit einer ersten Drucklufteingangskammer (88) und über dessen Auslassventil die erste Arbeitskammer (86) mit der Atmosphäre verbindbar ist; **gekennzeichnet durch**
b) ein zweites Doppelsitzventil (84), über dessen Einlassventil eine zweite mit dem Arbeitsanschluss (26) in Verbindung stehende Arbeitskammer (90) mit einer zweiten Drucklufteingangskammer (92) und über dessen Auslassventil die zweite Arbeitskammer (90) mit der Atmosphäre verbindbar ist,
c) wenigstens einen mit einem an einem Steueranschluss (42) anstehenden Steuerdruck beaufschlagbaren Relaiskolben (96), welcher das erste Doppelsitzventil (82) und das zweite Doppelsitzventil (84) betätigt, wobei
d) die erste Drucklufteingangskammer (88) an den ersten Druckluftvorrat (36) mittelbar oder unmittelbar angeschlossen ist und die zweite Drucklufteingangskammer (92) an einen vom ersten Druckluftvorrat (36) abweichenden und von diesem getrennten zweiten Druckluftvorrat (46) mittelbar oder unmittelbar angeschlossen ist, und wobei
e) die erste Drucklufteingangskammer (88) und die zweite Drucklufteingangskammer (92) wenigstens bei geschlossenen Einlassventilen der Doppelsitzventile (82, 84) voneinander getrennt sind.

2. Drucklufteinrichtung nach Anspruch 1, **dadurch gekennzeichnet, dass** der erste Bremskreis ein Vorderachs-Betriebsbremskreis ist, wobei der Arbeitsanschluss (26) mit wenigstens zwei pneumatischen Bremszylindern (6) der Vorderachse mittelbar oder unmittelbar verbunden ist.

3. Drucklufteinrichtung nach Anspruch 1 oder 2, **dadurch gekennzeichnet, dass** der zweite Druckluftvorrat (46) einem von einem Betriebsbremskreis abweichenden Druckluftverbraucherkreis zugeordnet ist.

4. Drucklufteinrichtung nach einem der vorhergehenden Ansprüche, **dadurch gekennzeichnet, dass** die Relaisventileinrichtung (8) Bestandteil eines elektro-pneumatischen Druckmodulators oder Druckregelmoduls (2) ist, welcher oder welches außer der Relaisventileinrichtung (8) wenigstens eine Einlass-/Auslassmagnetventilkombination (18), ein Back-up-Magnetventil (24), einen mit dem Arbeitsanschluss (26) in Verbindung stehenden Drucksensor (28) sowie ein elektronisches Steuergerät aufweist, welches die Einlass-/Auslassmagnetventilkombination (18) und das Back-up-Magnetventil (24) steuert und den Druck am Arbeitsanschluss (26) repräsentierende Signale empfängt.

5. Drucklufteinrichtung nach Anspruch 4, **dadurch gekennzeichnet, dass** der Steueranschluss (42) der Relaisventileinrichtung (8) sowohl von einem von der Einlass-/Auslassventilkombination (18) ausgesteuerten Steuerdruck als auch von einem vom Back-up-Ventil (24) ausgesteuerten Steuerdruck beaufschlagbar ist.

6. Drucklufteinrichtung nach Anspruch 5, **dadurch gekennzeichnet, dass** das Backup-Ventil (24) ausgangsseitig mit dem Steueranschluss (42) der Relaisventileinrichtung (8) und eingangsseitig mit einem Ausgang eines Wechselventils (108) verbunden ist, dessen erster Eingang mit einem dem ersten Bremskreis zugeordneten ersten Kanal (58) eines Betriebsbremsventils (60) und dessen zweiter Eingang einem einem zweiten Bremskreis zugeordneten zweiten Kanal (62) des Betriebsbremsventils (60) verbunden ist.

7. Drucklufteinrichtung nach Anspruch 6, **dadurch gekennzeichnet, dass** der Strömungsquerschnitt zwischen dem zweiten Kanal (62) des Betriebsbremsventils (60) und dem zweiten Eingang des Wechselventils (108) an wenigstens einer Stelle mittels eines Drosselelements (114) gedrosselt ist.

8. Drucklufteinrichtung nach Anspruch 6 oder 7, **dadurch gekennzeichnet, dass** der erste Bremskreis ein Vorderachs-Betriebsbremskreis und der zweite Bremskreis ein Hinterachs-Betriebsbremskreis der elektro-pneumatischen Betriebsbremseinrichtung ist.

9. Drucklufteinrichtung nach einem der Ansprüche 4 bis 8, **dadurch gekennzeichnet, dass** in Druckluftverbindungen (32, 48) zwischen den beiden Druckluftvorräten (36, 46) und dem Einlassventil (20) der Einlass-/Auslassventilkombination (18) wenigstens ein Rückschlagventil (14, 16) vorgesehen ist, welches eine Strömungsverbindung zwischen jedem einzelnen der beiden Druckluftvorräte (36, 46) und dem Einlassventils (20) der Einlass-/Auslassventilkombination (18) gestattet, aber eine Strömung vom ersten Druckluftvorrat (36) in den zweiten Druckluftvorrat (46) und in Gegenrichtung hierzu verhindert.

10. Drucklufteinrichtung nach Anspruch 9, **dadurch gekennzeichnet, dass** in den Druckluftverbindungen (32, 48) zwischen den beiden Druckluftvorräten (36, 46) und dem Einlassventil (20) der Einlass-/Auslassventilkombination (18)
a) ein erstes Rückschlagventil (14) vorgesehen ist, welches eine Strömung von dem ersten Druckluftvorrat (36) zum Einlassventil (20) gestattet, aber eine Strömung von dem zweiten Druckluftvorrat (46) in den ersten Druckluftvorrat (36) sperrt, und dass
b) ein zweites Rückschlagventil (16) vorgesehen ist, welches eine Strömung vom zweiten Druckvorrat (46) zum Einlassventil (20) gestattet, aber eine Strömung von dem ersten Druckluftvorrat (36) in den zweiten Druckluftvorrat (46) sperrt.

11. Drucklufteinrichtung nach einem der vorhergehenden Ansprüche, **dadurch gekennzeichnet, dass** wenigstens das erste Doppelsitzventil (82), das zweite Doppelsitzventil (84) und der wenigstens eine Relaiskolben (96) sowie wenigstens ein Ventilglied (102, 104) der Relaisventileinrichtung (8) koaxial oder parallel versetzt zueinander angeordnet sind.

12. Drucklufteinrichtung nach einem der vorhergehenden Ansprüche, **dadurch gekennzeichnet, dass** der wenigstens eine Relaiskolben 896) der Relaisventileinrichtung (8) wenigstens einen gemeinsames Ventilglied (102) des ersten Doppelsitzventils (82) und des zweiten Doppelsitzventils (84) betätigt.

13. Drucklufteinrichtung nach Anspruch 12, **dadurch gekennzeichnet, dass** das gemeinsame Ventilglied (102) eine Druckluftdurchführung (118) aufweist, mittels welcher die erste Arbeitskammer (86) und die zweite Arbeitskammer (90) mit der Atmosphäre verbindbar sind.

## Claims

1. A compressed air device for vehicles comprising an at least two-circuit pneumatic or electro-pneumatic brake device (1), having at least one relay valve device (8) by means of which a working port (26) is connected directly or indirectly to at least one pneumatic brake cylinder (6) of a first brake circuit and a reservoir port (38) is connected to at least one first compressed-air reservoir (36) assigned to the first brake circuit, the relay valve device (8) comprising at least the following:
a) a first double-seat valve (82), by means of the inlet valve of which a first working chamber (86) connected to the working port (26) can be connected to a first compressed-air inlet chamber (88) and by means of the outlet valve of which the first working chamber (86) can be connected to the atmosphere; **characterised in that**
b) a second double-seat valve (84), by means of the inlet valve of which a second working chamber (90) connected to the working port (26) can be connected to a second compressed-air inlet chamber (92) and by means of the outlet valve of which the second working chamber (90) can be connected to the atmosphere;
c) at least one relay piston (96), to which a control pressure prevailing at a control port (42) can be applied and which actuates the first double-seat valve (82) and the second double-seat valve (84),
d) the first compressed-air inlet chamber (88) being connected indirectly or directly to the first compressed-air reservoir (36) and the second compressed-air inlet chamber (92) being connected indirectly or directly to a second compressed-air store (46), which is different and separate from the first compressed-air reservoir (36), and
e) the first compressed-air inlet chamber (88) and the second compressed-air inlet chamber (92) being separated from one another at least when the inlet valves of the double-seat valves (82, 84) are closed.

2. A compressed-air device according to claim 1, **characterised in that** the first brake circuit is a front-axle service brake circuit, the working port (26) being connected indirectly or directly to at last two pneumatic brake cylinders (6) of the front axle.

3. A compressed-air device according to claim 1 or 2, **characterised in that** the second compressed-air reservoir (46) is assigned to a compressed-air consumer circuit which differs from a service brake circuit.

4. A compressed-air device according to any of the preceding claims, **characterised in that** the relay valve device (8) is a constituent part of an electro-pneumatic pressure modulator or pressure regulating module (2), which, aside from the relay valve device (8), has at least a one inlet/outlet solenoid valve combination (18), a back-up solenoid valve (24), a pressure sensor (28) connected to the working port (26) and an electronic control unit, which controls the inlet/outlet solenoid valve combination (18) and the back-up solenoid valve (24) and receives signals representing the pressure at the working port (26).

5. A compressed-air device according to claim 4, **characterised in that** both a control pressure set by the outlet/inlet combination (18) and a control pressure set by the back-up valve (24) can be applied to the control port (42) of the relay valve device (8).

6. A compressed-air device according to claim 5, **characterised in that** the back-up valve (24) is connected on the outlet side to the control port (42) of the relay valve device (8) and on the inlet side to an outlet of a shuttle valve (108) whose first inlet is connected to a first channel (58), assigned to the first brake circuit, of a service brake valve (60) and whose second inlet is connected to a second channel (62), assigned to a second brake circuit, of the service brake valve (60).

7. A compressed-air device according to claim 6, **characterised in that** in the flow cross-section between the second channel (62) of the service brake valve (60) and the second inlet of the shuttle valve (108) is throttled at at least one point by means of a throttle element (114).

8. A compressed-air device according to claim 6 or 7, **characterised in that** in the first brake circuit is a front-axle service brake circuit and the second brake circuit is a rear-axle service brake circuit of the electro-pneumatic service brake device.

9. A compressed-air device according to any of claims 4 to 8, **characterised in that** there is provided in compressed-air connections (32, 48) between the two compressed-air reservoirs (36, 46) and the inlet valve (20) of the inlet/outlet valve combination (18) at least one check valve (14, 16), which permits a flow connection between each individual compressed-air reservoir (36, 46) and the inlet valve (20) of the inlet/outlet valve combination (18) but prevents a flow both from the first compressed-air reservoir (36) into the second compressed-air reservoir (46) and in the opposite direction.

10. A compressed-air device according to claim 9, **characterised in that** in the compressed-air connections (32, 48) between the two compressed-air reservoirs (36, 48) and the inlet valve (20) of the inlet/outlet valve combination (18) there is provided
a) a first check valve (14), which permits a flow from the first compressed-air reservoir (36) to the inlet valve (20) but blocks a flow from the second compressed-air reservoir (46) into the inlet valve (20), and
b) a second check valve (16), which permits a flow from the second compressed-air reservoir (46) to the inlet valve (20) but blocks a flow from the first compressed-air reservoir (36) into the second compressed-air reservoir (46).

11. A compressed-air device according to any of the preceding claims, **characterised in that** at least the first double-seat valve (82), the second double-seat valve (84), the at least one relay piston (96) and at least one valve element (102, 104) of the relay valve device (8) are arranged coaxially or offset in parallel to one another.

12. A compressed-air device according to any of the preceding claims, **characterised in that** the at least one relay piston (96) of the relay valve device (8) actuates at least one valve element (102) common to the first double-seat valve (82) and the second double-seat valve (102).

13. A compressed-air device according to claim 12, **characterised in that** the common valve member (102) has a compressed-air leadthrough (118) by means of which the first working chamber (86) and the second working chamber (90) can be connected to the atmosphere.

## Revendications

1. Dispositif à air comprimé pour des véhicules comportant un dispositif (1) pneumatique ou électropneumatique de frein à au moins deux circuits, ayant au moins un dispositif (8) de soupape relais, par lequel un raccord (26) de travail communique directement ou indirectement avec au moins un cylindre (6) de frein pneumatique d'un premier circuit de frein et un raccord (38) de réservoir à au moins un premier réservoir (36) d'air comprimé associé à ce premier circuit de frein, le dispositif (8) de soupape relais comprenant au moins ce qui suit :
a) une première soupape (82) à double siège, par la soupape d'entrée de laquelle une première chambre (86) de travail, en communication avec le raccord (26) d'entrée, peut communiquer avec une première chambre (88) d'entrée d'air comprimé et par la soupape de sortie de laquelle la première chambre (86) de travail peut communiquer avec l'atmosphère; **caractérisé par**
b) une deuxième soupape (84) à double siège par la soupape d'entrée de laquelle une deuxième chambre (90) de travail en communication avec le raccord (26) de travail peut communiquer avec une deuxième chambre (92) d'entrée d'air comprimé et par la soupape de sortie de laquelle la deuxième chambre (90) de travail peut communiquer avec l'atmosphère,
c) au moins un piston (96) relais, qui peut être soumis à une pression de commande s'appliquant à un raccord (42) de commande et qui actionne la première soupape (82) à double siège et la deuxième soupape (84) à double siège, dans lequel
d) la première chambre (88) d'entrée d'air comprimé est raccordée directement ou indirectement au premier réservoir (36) d'air comprimé et la deuxième chambre (82) d'entrée d'air comprimé est raccordée directement ou indirectement à un deuxième réservoir (46) d'air comprimé, différent du premier réservoir (36) d'air comprimé et séparé de celui-ci, et dans lequel
e) la première chambre (88) d'entrée d'air comprimé à la deuxième chambre (92) d'entrée d'air comprimé sont séparées l'une de l'autre au moins lorsque les soupapes d'entrée des soupapes (82, 84) à double siège sont fermées.

2. Dispositif d'air comprimé suivant la revendication 1, **caractérisé en ce que** le premier circuit de frein est un circuit de frein de service d'essieu avant, le raccord (26) de travail communiquant directement ou indirectement avec au moins deux cylindres (6) de frein pneumatique de l'essieu avant.

3. Dispositif d'air comprimé suivant la revendication 1 ou 2, **caractérisé en ce que** le deuxième réservoir (46) d'air comprimé est associé à un circuit de consommateur d'air comprimé différent d'un circuit de frein de service.

4. Dispositif d'air comprimé suivant l'une des revendications précédentes, **caractérisé en ce que** le dispositif (8) de soupape relais fait partie d'un modulateur électropneumatique de pression ou d'un module (2) de régulation de pression, qui, en dehors du dispositif (8) de soupape relais, a au moins une combinaison (18) d'électrovannes d'entrée/sortie, une électrovanne (24) de back-up, un capteur (28) de pression en communication avec le raccord (26) de travail, ainsi qu'un appareil électronique de commande, qui commande la combinaison (18) d'électrovannes d'entrée/sortie et l'électrovanne (24) de back-up et reçoit des signaux représentant la pression dans le raccord (26) de travail.

5. Dispositif d'air comprimé suivant la revendication 4, **caractérisé en ce qu'**il peut être appliqué au raccord (42) de commande du dispositif (8) de soupape relais, tant une pression de commande, commandée par la combinaison (18) d'électrovannes d'entrée/sortie, qu'également une pression de commande commandée par la soupape (24) de back-up.

6. Dispositif d'air comprimé suivant la revendication 5, **caractérisé en ce que** la soupape (24) de back-up communique, du côté de la sortie, avec le raccord (42) de commande du dispositif (8) de soupape relais, du côté de l'entrée, avec une sortie d'une soupape (108) à deux voies, dont la première entrée communique avec un premier canal (58), associé au premier circuit de frein, d'une soupape (60) de frein de service et dont la deuxième entrée communique avec un deuxième canal (62), associé au deuxième circuit de frein, de la soupape (60) de frein de service.

7. Dispositif d'air comprimé suivant la revendication 6, **caractérisé en ce que** la section transversale d'écoulement entre le deuxième canal (62) de la soupape (60) de frein de service et la deuxième entrée de la soupape (108) à deux voies, est étranglée en au moins un point au moyen d'un élément (114) d'étranglement.

8. Dispositif d'air comprimé suivant la revendication 6 ou 7, **caractérisé en ce que** le premier circuit de frein est un circuit de frein de service d'essieu avant et le deuxième circuit de frein est un circuit de frein de service d'essieu arrière du dispositif de frein de service électropneumatique.

9. Dispositif d'air comprimé suivant l'une des revendications 4 à 8, **caractérisé en ce que**, dans des liaisons (32, 48) pour de l'air comprimé, entre les deux réservoirs (36, 46) d'air comprimé et la soupape (20) d'entrée de la combinaison (18) d'électrovannes d'entrée/sortie, est prévu au moins un clapet (14, 16) antiretour, qui autorise un passage entre chacun, individuellement, des deux réservoirs (36, 46) d'air comprimé et la soupape (20) d'entrée de la combinaison (18) d'électrovannes d'entrée/sortie, mais empêche un passage du premier réservoir (36) d'air comprimé au deuxième réservoir (46) d'air comprimé et en sens contraire.

10. Dispositif d'air comprimé suivant la revendication 9, **caractérisé en ce que**, dans les liaisons (32, 48) pour de l'air comprimé, entre les deux réservoirs (36, 46) d'air comprimé et la soupape (20) d'entrée de la combinaison (18) d'électrovannes d'entrée/sortie
a) est prévu un premier clapet (14) antiretour, qui autorise un passage du premier réservoir (36) d'air comprimé à la soupape (20) d'entrée, mais interdit un passage du deuxième réservoir (46) d'air comprimé au premier réservoir (36) d'air comprimé et **en ce que**
b) est prévu un deuxième clapet (16) antiretour, qui autorise un passage du deuxième réservoir (46) d'air comprimé à la soupape (20) d'entrée, mais interdit un passage du premier réservoir (36) d'air comprimé au deuxième réservoir (46) d'air comprimé.

11. Dispositif d'air comprimé suivant l'une des revendications précédentes, **caractérisé en ce qu'**au moins la première soupape (82) à double siège, la deuxième soupape (84) à double siège et le au moins un piston (96) relais, ainsi qu'au moins un obturateur (102, 104) du dispositif (8) de soupape relais sont montés en étant décalés les uns par rapport aux autres, coaxialement ou parallèlement.

12. Dispositif d'air comprimé suivant l'une des revendications précédentes, **caractérisé en ce que** le au moins un piston (96) relais du dispositif (8) de soupape relais actionne au moins un obturateur (102) commun de la première soupape (82) à siège double et de la deuxième soupape (84) à siège double.

13. Dispositif d'air comprimé suivant la revendication 12, **caractérisé en ce que** l'obturateur (102) commun a une traversée (118) pour de l'air comprimé, au moyen de laquelle la première chambre (86) de travail et la deuxième chambre (90) de travail peuvent communiquer avec l'atmosphère.
